# EUROPÄISCHE PATENTSCHRIFT

(11) **EP 0 712 742 B1**
(45) Veröffentlichungstag und Bekanntmachung des Hinweises auf die Patenterteilung: **29.07.1998**
(21) Anmeldenummer: 95117475.4
(22) Anmeldetag: 07.11.1995
(51) Int. Cl.: B60G 7/00

(54) **Pendelstütze oder dergleichen für die gelenkige Verbindung von Fahrwerksteilen in Kraftfahrzeugen**
Sway brace or equivalent for the articulated junction of suspension elements in motor vehicles
Support pendulaire ou équivalent pour la fixation articulée pour éléments de suspension de véhicules à moteur

(30) Priorität: 19.11.1994 DE 4441220
(43) Veröffentlichungstag der Anmeldung: 22.05.1996
(73) Patentinhaber: LEMFÖRDER METALLWAREN AG., 49441 Lemförde (DE)
(72) Erfinder: Otto, Silke, D-48448 Marl (DE); Nordloh, Alfons, D-49429 Visbek (DE)

(56) Entgegenhaltungen:
- EP-A- 0 163 509
- US-A- 3 121 348

## Beschreibung

Die Erfindung bezieht sich auf eine Pendelstütze oder dergleichen für die gelenkige Verbindung von Fahrwerksteilen in Kraftfahrzeugen.

Solche Pendelstützen werden in der Praxis als werkzeugfallende Teile im Spritzgießverfahren aus einem dafür geeigneten Werkstoff hergestellt. Erreicht wird dadurch bei einfachen Geometrien eine Gewichtsersparnis und auch eine Kostenersparnis. Es ist jedoch werkzeugtechnisch nicht möglich, eine glatte Außenkontur, insbesondere des Schaftteiles, auszubilden, so daß Pendelstützen dieser Bauart im praktischen Betrieb einer starken Verschmutzung unterliegen, wodurch die erzielte Gewichtsersparnis wieder verlorengeht. Bei komplizierten Geometrien müssen entsprechend komplizierte dreidimensionale Spritzgießwerkzeuge erstellt werden. Dadurch entstehen hohe Kosten und lange Vorlaufzeiten für die Werkzeugerstellung.

In US 3,121,348 wird beispielsweise eine Achsstrebe beschrieben, die aus zwei miteinander verbundenen, im Tiefziehverfahren hergestellten, hohlen metallischen Halbschalen besteht, deren endseitig angeformte Lageraugen zur Aufnahme je eines Lagerelementes dienen. Die Außenoberfläche der Halbschalen ist eben. Sie weisen an ihren Berührungsflächen stumpfe Oberflächen auf, die mittels einer Schweißverbindung zusammengefügt werden und somit das Bauteil bilden.
Eine weitere Ausgestaltung der in US 3,121,348 vorgestellten Lösung sieht darüber hinaus vor, die Achsstrebe in wenigstens zwei Bereiche aufzuteilen, wobei jeder der Bereiche wiederum aus den genannten beiden Halbschalen besteht. Die hohl ausgebildeten Halbschalen werden danach durch ein korrespondierendes Verbindungselement miteinander verbunden, das zunächst in den Hohlraum eines der Halbschalen eingeführt und dann durch eine Schweißung darin festgesetzt wird. Anschließend wird das zweite Halbschalenteil teleskopartig über das Verbindungselement geführt, bis sich die Kantenbereiche der Halbschalenteile berühren. Die Verbindung der Halbschalenteile erfolgt dann wiederum durch eine Schweißnaht.
Weiterhin wird in der Schrift vorgeschlagen, zusätzlich ein hohles Zwischenstück zu verwenden, das beiderseits mit Verbindungselementen ausgestattet ist. Auf diese Verbindungselemente des Zwischenstückes werden die hohlen Halbschalenhälften aufgeschoben und miteinander verschweißt.

Nachteilig sind bei dieser Lösung der hohe Fertigungsaufwand der Einzelteile, sowie die kostenintensive Montage des Bauteiles, das zudem aus Metall bestehend, ein hohes Eigengewicht aufweist.

Aus DE 41 32 779 A1 ist außerdem eine Achsstrebe fuer das Fahrwerk von Kraftfahrzeugen, insbesondere LKW bekannt, bei der endseitige Lageraugen zur Aufnahme von Gummilagern mit Lagerzapfen dienen, wobei sich die Lageraugen in Lagerkoepfen befinden und die beiden Lagerkoepfe ueber einen Hohlschaft miteinander verbunden sind und die beiden Lagerkoepfe jeweils aus zwei miteinander verschweissten metallischen Halbschalen gebildet sind.

Dementsprechend ist es Aufgabe der Erfindung, eine Pendelstütze mit den Merkmalen des Oberbegriffes unter Beibehaltung bekannter Vorteile mit einer glatten Außenkontur und mit großer Steifigkeit auszubilden.

Die Erfindung löst diese Aufgabe durch die Ausbildungsmerkmale des Patentanspruches 1 oder durch Ausbildungsmerkmale nach dem Kennzeichen des Anspruches 2.

Diese Ausbildung ermöglicht die Anordnung in sich geschlossener Hohlräume innerhalb des Schaftteiles der Pendelstütze mit einer glatten Außenkontur, so daß die Gefahr einer Verschmutzung erheblich verringert wird. Durch die innen angeordneten Hohlräume läßt sich auch eine größere Bauteilstabilität, das heißt, ein größeres Widerstands- und ein größeres Trägheitsmoment erreichen. Eine bessere Materialausnutzung ergibt schließlich auch eine Materialeinsparung und damit eine Kostenreduzierung. Der zur Verfügung stehende Bauraum kann besser genutzt werden.

Für den Schaftteil werden stabilitätsgünstige Querschnittsprofile, zum Beispiel Kastenprofile, Ovalprofile oder Profile mit mehreren, längsverlaufend durch Rippen getrennte Hohlräume bevorzugt.

Bei der Herstellung werden entweder die Endstücke mit den Lageraugen und das Schaftteil getrennt produziert und anschließend unter Benutzung bekannter Fügetechniken zusammengefügt, oder im Spritzgießverfahren getrennt hergestellte Endstücke weisen bereits einen Hohlschaftansatz auf, so daß die beiden Hohlschaftansätze an ihrer Stirnseite miteinander verbunden werden können. Auch dazu sind bekannte Fügetechniken, zum Beispiel Klebetechnik, Ultraschallschweißtechnik, Orbitalschweißtechnik oder dergleichen, geeignet.

In der Zeichnung sind Ausführungsbeispiele erfindungsgemäßer Lösungen dargestellt. Es zeigen:
- Figur 1: ein Ausführungsbeispiel teilweise in Ansicht und teilweise im Schnitt,
- Figur 2: eine gegenüber Figur 1 um 90° versetzte Ansicht mit einer Darstellung möglicher Querschnittsformen, wobei Querschnittsformen C, D und G nicht zur Erfindung gehören,
- Figur 3: ein von dem Beispiel in den Figuren 1 und 2 abweichendes Ausführungsbeispiel und
- Figur 4: eine gegenüber Figur 3 um 90° versetzte Ansicht mit einer Darstellung möglicher Querschnittsformen, wobei Querschnittsformen C, D und G nicht zur Erfindung gehören.

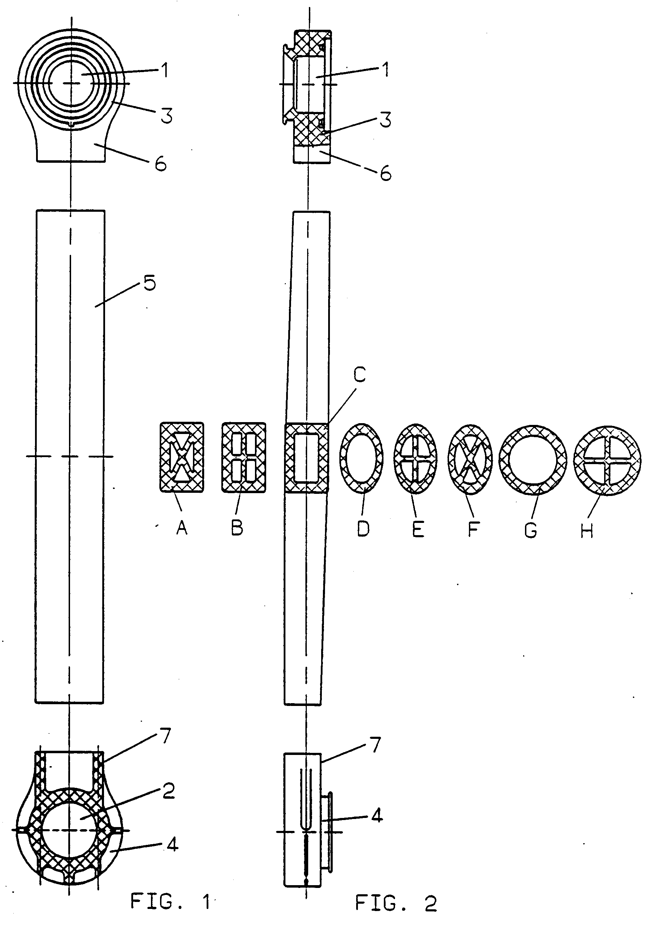

Die Pendelstütze nach dem Ausführungsbeispiel in den Figuren 1 und 2 ist aus zwei jeweils ein Lagerauge 1 und 2 aufweisenden Endstücken 3 und 4 sowie einem Schaftteil 5 aufgebaut. Die Endstücke 3 und 4 und das Schaftteil 5 werden im Spritzgießverfahren hergestellt. An den Endstücken 3 und 4 sind Anschlüsse 6 und 7 für die Verbindung mit den Stirnflächen des Schaftteiles 5 ausgebildet. Die Verbindung der Anschlüsse 6 und 7 mit den Stirnflächen des Schaftteiles 5 erfolgt beispielsweise durch eine Klebetechnik oder vorzugsweise durch Ultraschallschweißung bzw. Orbitalschweißung. Dazu ist es gegebenenfalls vorteilhaft, daß die Enden des Schaftteiles 5 und die Anschlüsse 6 bzw. 7 wechselseitig ineinandergreifen, so daß die Teile in einem ineinandergesteckten Bereich miteinander verbunden, zum Beispiel verklebt oder verschweißt, werden.

Das Schaftteil 5 kann in diesem Falle als Hohlprofil ausgeführt werden, welches sich im Spritzgießverfahren herstellen läßt. Mögliche Querschnittsausbildungen des Schaftteiles 5 sind in der Figur 2 angegeben. Die Querschnittsdarstellungen A und B zeigen Kastenprofile, die nach der Erfindung mehrere längsverlaufende Hohlräume aufweisen, die durch innere Stege voneinander getrennt sind. Entsprechend können auch runde oder ovale Profile nach den Querschnittsdarstellungen E, F und H ausgebildet sein, die ebenfalls längsverlaufend mehrere durch innere Stege voneinander getrennte Hohlräume besitzen. Profile der dargestellten Art zeichnen sich durch eine hohe Materialausnutzung bei größtmöglicher Steifigkeit aus. Sie besitzen also ein großes Trägheits- und ein großes Widerstandsmoment.

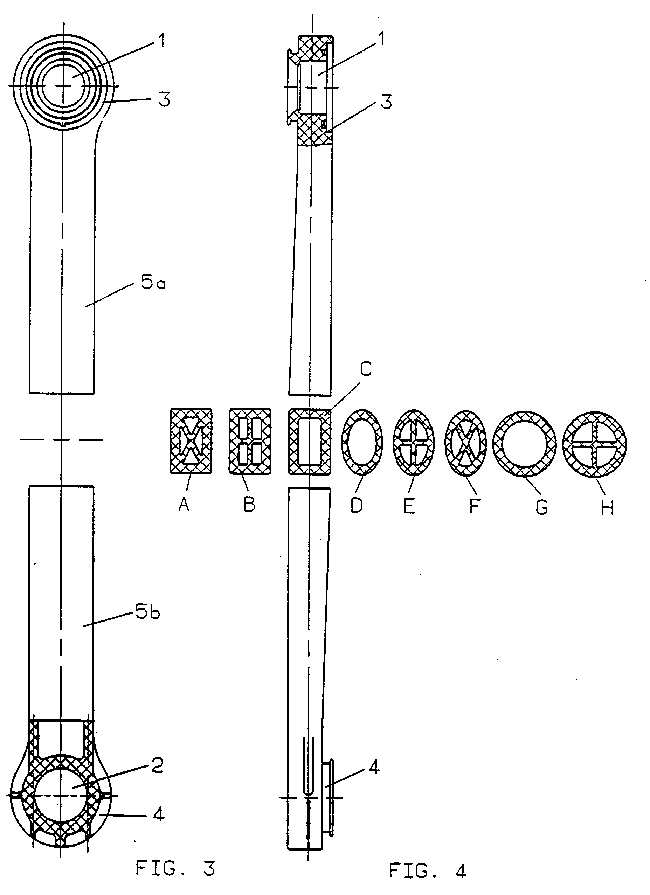

Ein davon abweichendes Ausführungsbeispiel ist in den Figuren 3 und 4 wiedergegeben. Bei diesem Ausführungsbeispiel sind Endstücke 3 und 4 jeweils mit Hohlschaftabschnitten 5a und 5b einstückig im Spritzgießverfahren hergestellt, wobei die Hohlschaftabschnitte anschließend an ihrer Stirnseite miteinander verbunden sind. Auch bei dieser Ausführungsform weisen die Hohlschaftabschnitte 5a und 5b eine glatte Außenkontur und innen längsverlaufend wenigstens einen Hohlraum auf. Die dargestellten Querschnittsformen A, B, E, F und H entsprechen der Beschreibung zu dem Ausführungsbeispiel in den Figuren 1 und 2. Bei dem Ausführungsbeispiel nach den Figuren 3 und 4 besteht die Pendelstütze lediglich aus zwei getrennt hergestellten Teilen, so daß nur eine Verbindung auszuführen ist. Auch diese Verbindung erfolgt mit einer an sich bekannten Fügetechnik, wie sie mehrfach bereits erwähnt wurde. Vorzugsweise liegt die Verbindungsstelle für die beiden Hohlschaftabschnitte 5a und 5b in der Mitte der Pendelstütze, wodurch Ausführungsformen ermöglicht werden, bei denen der Querschnitt der Pendelstütze von der Mitte zu den Endstücken hin in den Abmessungen reduziert ist. Die Hohlschaftabschnitte 5a und 5b können jedoch auch ungleich lang ausgeführt werden.

## Patentansprüche

1. Pendelstütze aus Kunststoff für die gelenkige Verbindung von Fahrwerksteilen in Kraftfahrzeugen, bei der an den Enden ausgebildete Lageraugen (1, 2) durch ein Schaftteil (5, 5a, 5b) einstückig miteinander verbunden sind, wobei dieses Schaftteil eine glatte Außenkontur aufweist, innen hohl ausgebildet ist und mehrere längsverlaufende durch Rippen getrennte Hohlräume aufweist.

2. Pendelstütze nach Anspruch 1,
dadurch gekennzeichnet, daß
die Endstücke (3,4) und die Enden des Schaftteiles (5) an der Verbindungsstelle wechselseitig ineinandergreifen.

3. Arbeitsverfahren zur Herstellung einer Pendelstütze nach einem der vorhergehenden Ansprüche, dadurch gekennzeichnet, daß im Spritzgießverfahren getrennt hergestellte Endstücke (3,4) mit dem Schaftteil (5) durch eine an sich bekannte Fügetechnik, zum Beispiel Klebetechnik, Ultraschallschweißtechnik, Orbitalschweißtechnik, einstückig miteinander verbunden werden.

## Claims

1. Swinging support made of plastic for the articulated connection of running gear parts in motor vehicles, in which support, bearing eyes (1, 2) constructed at the ends are connected to one another in one piece by a shaft part (5, 5a, 5b), the said shaft part having a smooth outer contour, being of hollow construction on the inside and having a number of cavities which are separated, in a longitudinally extending manner, by ribs.

2. Swinging support according to claim 1,
characterised in that
the end pieces (3, 4) and the ends of the shaft part (5) engage in one another in a reciprocal manner at the connection point.

3. Working process for manufacturing swinging supports according to one of the preceding claims, characterised in that end pieces (3, 4), which are manufactured separately by the injection-moulding process, are connected to one another in one piece by means of the shaft part (5) by a joining technique which is known *per se*, for example an adhesion technique, an ultrasonic welding technique or an orbital welding technique.

## Revendications

1. Support oscillant en matière plastique pour la liaison articulée de parties du châssis de véhicules automobiles, dans lequel des oeillets de palier (1, 2) formés aux deux extrémités sont reliés entre eux d'un seul tenant par une partie en forme de tige (5, 5a, 5b), dans lequel cette partie en forme de tige possède un profil extérieur lisse, est creuse intérieurement et possède plusieurs cavités longitudinales séparées par des nervures.

2. Support oscillant selon la revendication 1, caractérisé en ce que les éléments d'extrémité (3, 4) et les extrémités de la partie en forme de tige (5) s'engagent les unes dans les autres au niveau du point de jonction.

3. Procédé de travail pour fabriquer un support oscillant selon l'une des revendications précédentes, caractérisé en ce qu'on réunit entre eux d'un seul tenant les éléments d'extrémité (3, 4) fabriqués séparément selon le procédé de moulage par injection et la partie en forme de tige (5), au moyen d'une technique d'assemblage connue en soi, par exemple une technique de collage, une technique de soudage par ultrasons, une technique de soudage orbital.
